# EUROPEAN PATENT APPLICATION

(11) **EP 4 395 101 A1**
(43) Date of publication of application: **03.07.2024**
(21) Application number: 22938224.7
(22) Date of filing: 10.10.2022
(51) Int. Cl.: H02J 3/38, H02J 13/00, H02M 7/06

(54) **WIND FARM GRID-CONNECTION SYSTEM WITH DIODE-RECTIFIED OUTPUT TRANSMISSION, AND CONTROL AND PROTECTION SYSTEM**

(30) Priority: 18.04.2022 CN 202210406725
(71) Applicant: Shanghai Jiao Tong University, Shanghai 200240 (CN)
(72) Inventor: CAI, Xu, Shanghai 200240 (CN); YANG, Mingyang, Shanghai 200240 (CN); YANG, Renxin, Shanghai 200240 (CN)
(74) Representative: Bayramoglu et al.
(86) International application number: PCT/CN2022/124269
(87) International publication number: WO 2023/202001

(57) **Abstract**

The present invention provides a grid-connected system of a wind farm for sending through diode rectification. Multiple full-power conversion wind power generator sets are collected in parallel to a sending-end converter station based on a diode rectifier. The sending-end converter station is connected to an onshore receiving-end converter station. An energy storage apparatus is connected to DC buses of converters of some of the full-power conversion wind power generator sets, the AC circuit breaker for line collection is configured on an AC collection line between the full-power conversion wind power generator sets, an AC circuit breaker of a sending-end station is configured on an AC side of the sending-end converter station, a current limiting reactor is configured on a DC side of the onshore receiving-end converter station, and an AC side of the onshore receiving-end converter station is connected to an onshore power grid through a transformer and an AC circuit breaker of the receiving-end station. In addition, the present invention further provides a control and protection system and a frequency-reactive power self-balancing control system for a grid-side inverter of a wind power converter.

## Description

### TECHNICAL FIELD

The present invention mainly relates to the technical field of wind power grid connection, and in particular, to a grid-connected system of a wind farm for sending through diode rectification and a control and protection system, and further provides a frequency-reactive power self-balancing control system that is for a grid-side inverter of a wind power converter and that matches the control and protection system.

### BACKGROUND

With the rapid development of offshore wind power, offshore wind farm resources have been exhausted, and offshore wind power is developing toward deep and far seas. As an offshore distance of a wind farm increases, DC grid connection becomes inevitable. Flexible DC electric transmission is not promoted and used on a large scale because of high costs and complexity. Diode rectification is a low-cost, highly reliable rectification technology, and is used to replace an offshore sending-end converter valve based on a modular multi-level converter, helping significantly reduce DC conversion costs and achieving a lightweight offshore converter platform. Although the academic and engineering circles have been exploring a DC grid connection technology of wind power through a diode rectifier, this technology has not been realized in engineering. A biggest challenge is that the diode rectifier cannot provide voltage-frequency support for the wind farm and backward power required for start-up of the wind farm. There are challenges in start-up, operation, fault ride-through, and the like of the wind farm. In a proposed DC grid-connected technology for a wind farm for sending through diode rectification, an outer loop control algorithm for a machine-side converter of a wind power generator set needs to be replaced with an outer loop control algorithm for a grid-side inverter, and a control strategy for the grid-side inverter is also more complicated than a conventional control strategy, which requires deep transformation of control logic of the wind power generator set, and stable operation of the wind power generator set also needs to be evaluated. In addition, a centralized reactive power compensation apparatus needs to be equipped for the wind farm, which does not help lightweight of a sending-end converter platform. What's more, a start power supply is difficult to obtain and construction costs for the start power supply are high.

At present, no description or report of a technology similar to the present invention has been found, and similar information at home and abroad has not yet been collected.

### SUMMARY

The present invention provides a grid-connected system of a wind farm for sending through diode rectification, to overcome shortcomings in existing technologies.

The present invention is implemented by using the following technical solutions:
According to a first aspect of the present invention, a grid-connected system of a wind farm for sending through diode rectification is provided, including: a full-power conversion wind power generator set, an energy storage apparatus, an AC collection line, an AC circuit breaker for line collection, a sending-end converter station based on a diode rectifier, an AC circuit breaker of a sending-end station, a DC electric transmission cable, an onshore receiving-end converter station, a current limiting reactor, a transformer, and an AC circuit breaker of a receiving-end station, where
multiple full-power conversion wind power generator sets are collected in parallel through the AC collection line to the sending-end converter station based on the diode rectifier, and the sending-end converter station based on the diode rectifier is connected to the onshore receiving-end converter station through the DC electric transmission cable; and the energy storage apparatus is connected to DC buses of converters of some of the full-power conversion wind power generator sets, the AC circuit breaker for line collection is configured on the AC collection line between the full-power conversion wind power generator sets, the AC circuit breaker of the sending-end station is configured on an AC side of the sending-end converter station based on the diode rectifier, the current limiting reactor is configured on a DC side of the onshore receiving-end converter station, and an AC side of the onshore receiving-end converter station is connected to an onshore power grid through the transformer and the AC circuit breaker of the receiving-end station.

Further, the onshore receiving-end converter station is an onshore MMC station with a half-bridge sub-module structure or an on-shore MMC station with a full-bridge or hybrid sub-module structure; and
when the onshore receiving-end converter station is the on-shore MMC station with the half-bridge sub-module structure, the grid-connected system further includes a DC circuit breaker; and the DC circuit breaker is configured on the DC side of the onshore receiving-end converter station.

According to a second aspect of the present invention, a control and protection system that matches a grid-connected system of a wind farm for sending through diode rectification is provided, including:
a main control module of a wind power generator set, configured to output a torque reference value of a machine-side converter of a wind power converter, a pitch command of the wind power generator set, and/or a start/stop command and start mode command of a grid-side inverter of the wind power converter, and a start/stop command and working mode command of an energy storage converter;
a machine-side converter control module of the wind power converter, configured to control an electromagnetic torque of a permanent magnet synchronous motor based on the torque reference value of the machine-side converter of the wind power converter sent by the main control module of the wind power generator set, where a control strategy for the machine-side converter of the wind power converter is the same as a control strategy for a machine-side converter of a full-power conversion wind power generator set; and a control strategy is a vector control strategy based on rotor flux linkage orientation;
a control and protection module of the grid-side inverter of the wind power converter, configured to receive the start/stop command and start mode command of the grid-side inverter of the wind power converter from the main control module of the wind power generator set, control a DC bus voltage in a normal power generation stage of the full-power conversion wind power generator set, limit voltage rise of an internal grid in the wind farm in a low-voltage fault stage of an onshore power grid, block power output by a diode rectifier, and perform fault current limiting control in case of a short-circuit fault in a DC electric transmission line;
an energy storage converter control module of the wind power generator set, configured to receive the start/stop command and working mode command of the energy storage converter from the main control module of the wind power generator set, and control the DC bus voltage in a generator set start phase, and charge an energy storage battery in a generator set power output phase;
an unloading circuit control module of the wind power converter, configured to control a DC-side unloading apparatus and stabilize the DC bus voltage after a rise in a voltage of a DC bus capacitor of the converter is detected;
a relay protection module of a sending-end converter station, configured to: determine a short-circuit fault in the DC electric transmission line and control an action of an AC circuit breaker of a receiving-end station on an AC side of the diode rectifier; and when it is determined that a short-circuit fault occurs on the DC electric transmission line, enable the AC circuit breaker of the receiving-end station on the AC side of the diode rectifier to act, to clear a fault current; when it is determined that a short-circuit fault on the DC electric transmission line is cleared, reclose the AC circuit breaker of the receiving-end station on the AC side of the diode rectifier; or when it is determined that the short-circuit fault on the DC electric transmission line is a permanent fault, send a stop command to the main control module of the wind power generator set;
a relay protection module of the receiving-end converter station, configured to: determine a short-circuit fault of the DC electric transmission line and control an outlet-side circuit breaker of the receiving-end station; and when it is determined that the short-circuit fault occurs on the DC electric transmission line, control a DC circuit breaker or the AC circuit breaker of the receiving-end station to act to remove the fault; when it is determined that the short-circuit fault on the DC electric transmission line is cleared, reclose the DC circuit breaker or the AC circuit breaker of the receiving-end station; or when it is determined that the short-circuit fault on the DC electric transmission line is a permanent fault, send a stop command to a control and protection module of the receiving-end station; and
the control and protection module of the receiving-end station, configured to control a voltage on the DC electric transmission line to a rated value in the normal power generation stage of the wind power generator set, and to compensate a reactive power for a power system in the low-voltage fault stage of the onshore power grid.

According to a third aspect of the present invention, a frequency-reactive power self-balancing control system that is for a grid-side inverter of a wind power converter and that matches a control and protection system is provided, including:
a phase-locked loop frequency output unit of the grid-side inverter of the wind power converter, configured to extract frequency information output by a phase-locked loop and use the frequency information as an input into a frequency-reactive power self-balancing function application unit;
a frequency-reactive power self-balancing function generation and storage unit, configured to generate and store a frequency-reactive power self-balancing function;
the frequency-reactive power self-balancing function application unit, configured to obtain the frequency-reactive power self-balancing function generated by the frequency-reactive power self-balancing function generation and storage unit, and use the input frequency information as an independent variable of the frequency-reactive power self-balancing function, to obtain a dependent variable as an input into a reactive power control unit of the grid-side inverter of the wind power converter; and
the reactive power control unit of the grid-side inverter of the wind power converter, configured to control a reactive power output by the grid-side inverter of the wind power converter.

### BRIEF DESCRIPTION OF DRAWINGS

Other features, objects, and advantages of the present invention will become more apparent by reading detailed description of non-limiting embodiments with reference to the following drawings:
FIG. 1 is a schematic diagram of a DC grid-connected system of a wind farm through a diode rectifier according to an embodiment of the present invention;
FIG. 2 is a block diagram of a module of a control and protection system that matches a grid-connected system of a wind farm for sending through diode rectification according to an embodiment of the present invention;
FIG. 3 is a block diagram of an internal sub-module of a control and protection module of a grid-side inverter of a wind power converter according to an embodiment of the present invention;
FIG. 4 is a block diagram of an internal sub-module of an energy storage converter control module according to an embodiment of the present invention;
FIG. 5 is a block diagram of an internal sub-module of an unloading apparatus control module of a wind power converter according to an embodiment of the present invention;
FIG. 6 is a block diagram of an internal sub-module of a relay protection module of a sending-end converter station according to an embodiment of the present invention;
FIG. 7 is a block diagram of an internal sub-module of a control and protection module of a receiving-end station according to an embodiment of the present invention;
FIG. 8 is a block diagram of a module of a frequency-reactive power self-balancing control algorithm for a grid-side inverter of a wind power converter according to an embodiment of the present invention;
FIG. 9 is a block diagram of an internal subunit of a frequency-reactive power self-balancing function generation and storage unit according to an embodiment of the present invention;
FIG. 10 is an internal schematic diagram of a normal-operation control module of a grid-side inverter of a wind power converter according to an embodiment of the present invention;
FIG. 11 is a graph of a static working area and a frequency-reactive power self-balancing function curve of an internal grid (frequency, reactive power) of a wind farm according to an embodiment of the present invention;
FIG. 12 is waveforms related to black start of a wind power generator set equipped with an energy storage system according to a simulation case 1 of the present invention;
FIG. 13 is a diagram of waveforms related to black start of a wind farm according to a simulation case 1 of the present invention;
FIG. 14 is a diagram of waveforms related to change of power generation in case of light load-half load-full load in a wind farm according to a simulation case 2 of the present invention;
FIG. 15 is a diagram of waveforms related to low-voltage fault ride-through of an onshore AC power grid according to a simulation case 3 of the present invention; and
FIG. 16 is a diagram of waveforms related to short-circuit fault protection and ride-through of a DC electric transmission line according to a simulation case 4 of the present invention.

### DETAILED DESCRIPTION OF EMBODIMENTS

The following is a detailed description of embodiments of the present invention: The embodiments are implemented on the premise of technical solutions of the present invention, and detailed implementations and specific operating processes are provided. It should be noted that a person of ordinary skill in the art may make some improvements and transformation without departing from the idea of the present invention, and the improvements and transformation shall fall within the protection scope of the present invention.

A first embodiment of the present invention provides a grid-connected system of a wind farm for sending through diode rectification, including:
a full-power conversion wind power generator set, a small-capacity energy storage apparatus, an AC collection line, an AC circuit breaker for line collection, a sending-end converter station based on a diode rectifier, an AC circuit breaker of a sending-end station, a DC electric transmission cable (that is, a straight-line electric transmission line), an onshore receiving-end converter station, a current limiting reactor, a transformer, and an AC circuit breaker of a receiving-end station. Multiple full-power conversion wind power generator sets are collected in parallel through the AC collection line to the sending-end converter station based on the diode rectifier. The sending-end converter station is connected to the onshore receiving-end converter station through the DC electric transmission cable. The small-capacity energy storage apparatus is connected to DC buses of converters of some of the full-power conversion wind power generator sets. The AC circuit breaker for line collection is configured on the collection line between wind power generator sets. The AC circuit breaker of the sending-end station is configured on an AC side of the sending-end converter station, and the current limiting reactor is configured on a DC side of the receiving-end station. The AC side of the receiving-end station is connected to an onshore power grid through the transformer and the AC circuit breaker of the receiving-end station.

In a preferred embodiment, the onshore receiving-end converter station is an onshore MMC station with a half-bridge sub-module structure or an on-shore MMC station with a full-bridge or hybrid sub-module structure.

Further, when the onshore receiving-end converter station is the on-shore MMC station with the half-bridge sub-module structure, the grid-connected system further includes a DC circuit breaker. The DC circuit breaker is configured on the DC side of the onshore receiving-end converter station.

Based on the grid-connected system of the wind farm for sending through diode rectification provided in the foregoing embodiment, a second embodiment of the present invention provides a control and protection system that matches the grid-connected system in the first embodiment of the present invention.

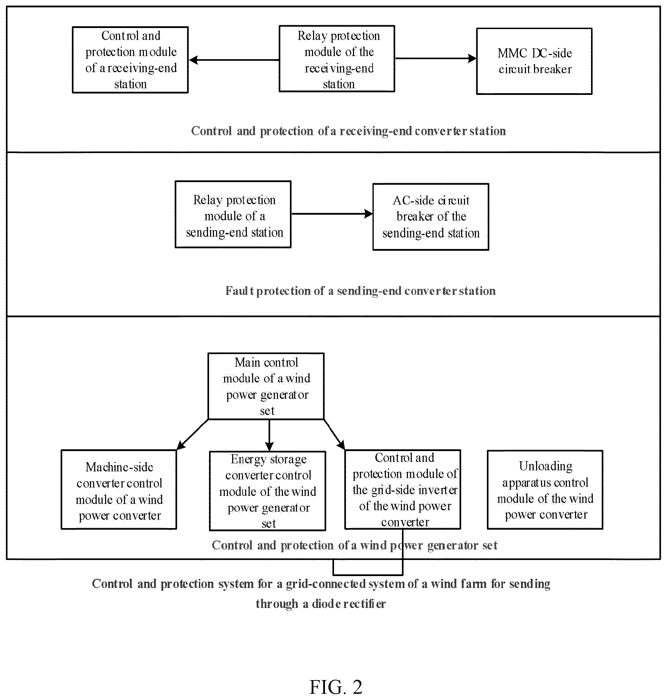

As shown in FIG. 2, the control and protection system includes:
a main control module of a wind power generator set, configured to output a torque reference value of a machine-side converter of a wind power converter, a pitch command of the wind power generator set, and/or a start/stop command and start mode command of a grid-side inverter of the wind power converter, and a start/stop command and working mode command of an energy storage converter (that is, energy storage apparatus);
a machine-side converter control module of the wind power converter, configured to control an electromagnetic torque of a permanent magnet synchronous motor based on the torque reference value of the machine-side converter of the wind power converter sent by the main control module of the wind power generator set, where a control strategy for the machine-side converter of the wind power converter is the same as a control strategy for a machine-side converter of a full-power conversion wind power generator set;
a control and protection module of the grid-side inverter of the wind power converter, configured to receive the start/stop command and start mode command of the grid-side inverter of the wind power converter from the main control module of the wind power generator set, control a DC bus voltage in a normal power generation stage of the full-power conversion wind power generator set, limit voltage rise of an internal grid in the wind farm in a low-voltage fault stage of an onshore power grid, block power output by a diode rectifier, and perform fault current limiting control in case of a short-circuit fault in a DC electric transmission line;
an energy storage converter control module of the wind power generator set, configured to receive the start/stop command and working mode command of the energy storage converter from the main control module of the wind power generator set, and control the DC bus voltage in a generator set start phase, and charge an energy storage battery in a generator set power output phase;
an unloading circuit control module of the wind power converter, configured to control a DC-side unloading apparatus and stabilize the DC bus voltage after a rise in a voltage of a DC bus capacitor of the converter is detected;
a relay protection module of a sending-end converter station, configured to: determine a short-circuit fault in the DC electric transmission line and control an action of an AC circuit breaker of a receiving-end station on an AC side of the diode rectifier; and when it is determined that a short-circuit fault occurs on the DC electric transmission line, enable the AC circuit breaker of the receiving-end station on the AC side of the diode rectifier to act, to clear a fault current; when it is determined that a short-circuit fault on the DC electric transmission line is cleared, reclose the AC circuit breaker of the receiving-end station on the AC side of the diode rectifier; or when it is determined that the short-circuit fault on the DC electric transmission line is a permanent fault, send a stop command to the main control module of the wind power generator set;
a relay protection module of the receiving-end converter station, configured to: determine a short-circuit fault of the DC electric transmission line and control an outlet-side circuit breaker of the receiving-end station; and when it is determined that the short-circuit fault occurs on the DC electric transmission line, control a DC circuit breaker or the AC circuit breaker of the receiving-end station to act to remove the fault; when it is determined that the short-circuit fault on the DC electric transmission line is cleared, reclose the DC circuit breaker or the AC circuit breaker of the receiving-end station; or when it is determined that the short-circuit fault on the DC electric transmission line is a permanent fault, send a stop command to a control and protection module of the receiving-end station; and
the control and protection module of the receiving-end station, configured to control a voltage on the DC electric transmission line to a rated value in the normal power generation stage of the wind power generator set, and to compensate a reactive power for a power system in the low-voltage fault stage of the onshore power grid.

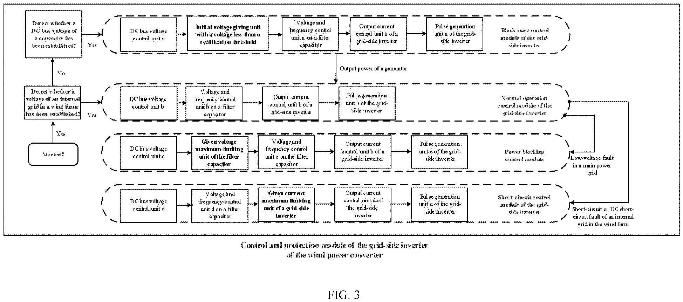

As shown in FIG. 3, in a preferred embodiment, a control and protection module of a grid-side inverter of a wind power converter includes the following modules.

A black start control module of the grid-side inverter of the wind power converter, configured to control the grid-side inverter of the wind power converter to build a control module for an initial voltage of the internal grid during black start of the generator set. When the grid-side inverter of the wind power converter receives a start command from the main control, detects that a voltage for the internal grid in a wind farm has not yet been established, and detects that the DC bus voltage for the converter has been established, the black start control module of the grid-side inverter of the wind power converter is triggered. The black start control module of the grid-side inverter of the wind power converter includes: a DC bus voltage control unit, an initial-voltage giving unit with a voltage less than a rectification threshold, a voltage and frequency control unit on a filter capacitor, an output current control unit of the grid-side inverter of the wind power converter, and a drive pulse generation unit of the grid-side inverter. The DC bus voltage control unit is configured to control the DC bus voltage of the generator set in a closed loop and output a reference value for a voltage amplitude on the filter capacitor. Because the DC bus voltage has been established before the black start control module of the grid-side inverter of the wind power converter is triggered, an output of the unit is 0. The initial-voltage giving unit with a voltage less than a rectification threshold is configured to give an initial reference value for the voltage amplitude on the filter capacitor, and the reference value is less than a lowest rectification threshold. The voltage and frequency control unit on the filter capacitor is configured to control a voltage and/or frequency on the filter capacitor in a closed loop and output a reference value of a current loop. A phase value used in dq transformation derives from phase output of a phase-locked loop configured to perform phase locking on the voltage on the filter capacitor. The output current control unit of the grid-side inverter of the wind power converter receives a current reference value output by the voltage and frequency control unit on the filter capacitor, performs closed-loop control on a current on an outlet of the grid-side inverter of the wind power converter, and outputs a three-phase voltage reference value. The drive pulse generation unit of the grid-side inverter receives the reference voltage output by the output current control unit of the grid-side inverter of the wind power converter and generates a drive pulse signal of the grid-side inverter of the wind power converter.

A normal-operation control module of the grid-side inverter of the wind power converter, configured to control an internal DC bus voltage of the generator set during normal operation of the grid-side inverter. When a generator outputs power, the normal-operation control module of the grid-side inverter of the wind power converter is automatically triggered. The normal-operation control module of the grid-side inverter of the wind power converter includes: a DC bus voltage control unit, a voltage and frequency control unit on the filter capacitor, an output current control unit of the grid-side inverter of the wind power converter, and a drive pulse generation unit of the grid-side inverter. The DC bus voltage control unit is configured to control the DC bus voltage of the generator set in a closed loop and output the reference value for the voltage amplitude on the filter capacitor. Corresponding sub-units in the voltage and frequency control unit on the filter capacitor, the output current control unit of the grid-side inverter of the wind power converter, the drive pulse generation unit of the grid-side inverter, and the black start control module of the grid-side inverter of the wind power converter implement same functions. Details are not described herein.

A power blocking control module, configured to control the grid-side inverter of the wind power converter of the generator set to block an output power when a low-voltage fault occurs in the onshore power grid. When the low-voltage fault occurs in the onshore main power grid, the power blocking control module of the grid-side inverter power of the wind power converter is automatically triggered, and the control module is automatically triggered. The power blocking module includes: a DC bus voltage control unit, a given voltage maximum-limiting unit of the filter capacitor, a voltage and frequency control unit on the filter capacitor, an output current control unit of the grid-side inverter of the wind power converter, and a drive pulse generation unit of the grid-side inverter. The DC bus voltage control unit is configured to control the DC bus voltage of the generator set in a closed loop and output the reference value of the voltage amplitude on the filter capacitor. The given voltage maximum-limiting unit is configured to limit the reference value of the voltage amplitude on the filter capacitor to a set maximum amplitude. As a DC-side voltage on the diode rectifier rises, an output power of the diode rectifier is automatically blocked. Corresponding sub-units in the voltage and frequency control unit on the filter capacitor, the output current control unit of the grid-side inverter of the wind power converter, the drive pulse generation unit of the grid-side inverter, and the normal-operation control module of the grid-side inverter of the wind power converter implement same functions. Details are not described herein.

A short-circuit current control module of the grid-side inverter of the wind power converter, configured to control a short-circuit fault current when the short-circuit fault occurs in the internal grid or DC electric transmission line in the wind farm, to protect a switching element of the converter and the diode rectifier. When the short-circuit fault occurs in the internal grid or DC electric transmission line in the wind farm, the short-circuit current control module of the grid-side inverter of the wind power converter is automatically triggered. The short-circuit current control module of the grid-side inverter of the wind power converter includes: a DC bus voltage control unit, a voltage and frequency control unit on the filter capacitor, a given current maximum-limiting unit of the grid-side inverter of the wind power converter, an output current control unit of the grid-side inverter of the wind power converter, and a drive pulse generation unit of the grid-side inverter. The given current maximum-limiting unit of the grid-side inverter of the wind power converter is configured to limit a current output by the grid-side inverter to a set maximum amplitude according to a principle of priority output of reactive power. Corresponding sub-units in the DC bus voltage control unit, the voltage and frequency control unit on the filter capacitor, the output current control unit of the grid-side inverter of the wind power converter, the drive pulse generation unit of the grid-side inverter, and the normal-operation control module of the grid-side inverter of the wind power converter implement same functions. Details are not described herein.

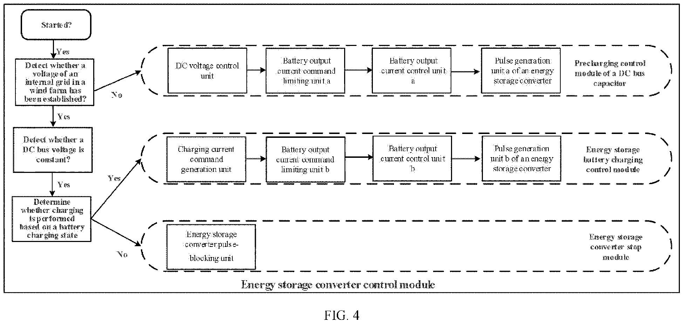

As shown in FIG. 4, in a preferred embodiment, the energy storage converter control module of the wind power generator set includes the following modules.

A precharging control module of a DC bus capacitor, configured to control the energy storage converter to precharge the DC bus capacitor of the wind power converter and control the DC bus voltage to be constant during black start of the generator set. When the energy storage converter control module receives a start command, it is detected whether a voltage of an internal grid in a wind farm is established. If the voltage is not established, the control module is triggered. The precharging control module of the DC bus capacitor includes a DC voltage control unit, a battery output current command limiting unit, a battery output current control unit, and a pulse generation unit of an energy storage converter. The DC voltage control unit is configured to control the DC bus voltage of the generator set in a closed loop and output a current reference value. The current reference value output by the DC voltage control unit is limited by the battery output current command limiting unit, and then a final current command value is output. The battery output current control unit controls, in a closed loop, a current output by a battery according to the final current command value, and outputs a standardized DC reference level. The pulse generation unit of the energy storage converter receives an output signal from the battery output current control unit, compares the output signal with a triangle wave with an amplitude of 1, and generates a drive pulse of the energy storage converter.

An energy storage battery charging control module, configured to charge an under-powered energy storage battery during power generation of the wind farm. When it is detected that the voltage of the internal grid in the wind farm has been established, the DC bus voltage is constant, and the energy storage battery is in an under-powered state, the energy storage battery charging module is triggered. The energy storage battery charging control module includes a charging current command generation unit, a battery output current command limiting unit, a battery output current control unit, and a pulse generation unit of the energy storage converter. The charging current command generation unit is configured to generate and output a reference value of a current output by the battery. Corresponding sub-units in the battery output current command limiting unit, the battery output current control unit, the pulse generation unit of the energy storage converter, and the precharging control module of the DC bus capacitor implement same functions. Details are not described herein.

An energy storage converter stop module, configured to stop the energy storage converter after power generation is started for the wind farm and the battery is fully charged. When it is detected that the voltage of the internal grid in the wind farm has been established, the DC bus voltage is constant, and the energy storage battery is fully charged, the energy storage converter stop module is triggered. The energy storage converter stop module includes an energy storage converter pulse-blocking unit that is configured to block an energy storage converter drive pulse.

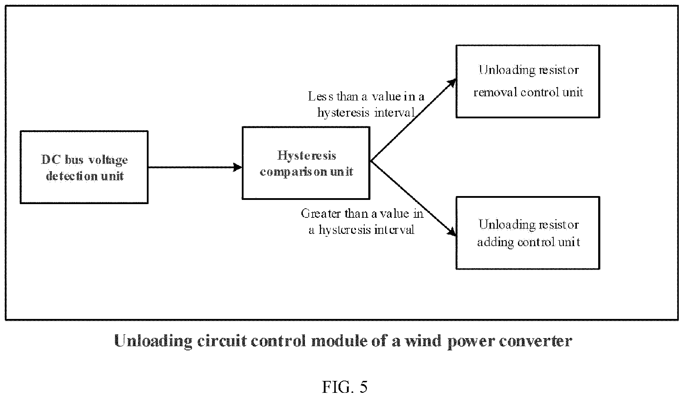

As shown in FIG. 5, in a preferred embodiment, the unloading circuit control module of the wind power converter includes the following modules.

A DC bus voltage detection unit, configured to detect a DC bus voltage of the converter of the generator set in real time and output a voltage signal to a hysteresis comparison unit.

The hysteresis comparison unit, configured to compare the DC bus voltage with a hysteresis interval and output an unloading resistor control trigger signal. When a voltage value increases and is greater than a value in the hysteresis interval, an unloading resistor adding control unit is triggered. When a voltage value decreases and is less than a value in the hysteresis interval, an unloading resistor removal control unit is triggered.

The unloading resistor adding control unit, configured to control adding of an unloading resistor.

The unloading resistor removal control unit, configured to control removal of the unloading resistor.

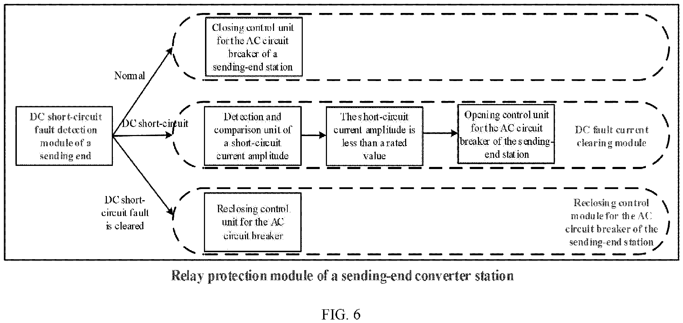

As shown in FIG. 6, in a preferred embodiment, the relay protection module of the sending-end converter station includes the following modules.

A sending-end DC fault detection module, configured to detect a short-circuit fault in the DC electric transmission line and trigger different control and protection modules according to fault conditions. When it is detected that the DC line operates normally, a sending-end station normal-operation control module is triggered. When a DC short-circuit fault is detected, a DC fault current clearing module is triggered. When it is detected that the DC short-circuit fault is cleared, a reclosing control module for the AC circuit breaker of the sending-end station is triggered.

The sending-end station normal-operation control module, configured to control the AC circuit breaker of the sending-end station to be closed. When the module receives a normal operation signal output from the sending-end DC fault detection module, the module is triggered. The sending-end station normal-operation control module includes a closing control unit for the AC circuit breaker of the sending-end station. The closing control unit for the AC circuit breaker of the sending-end station is configured to control an AC circuit breaker of the sending-end station to be closed.

The DC fault current clearing module, configured to control, when a DC short-circuit current is limited within a rated range, the AC circuit breaker of the sending-end station to be disconnected, to clear the DC short-circuit fault current. When the module receives a DC short-circuit signal output by the sending-end DC fault detection module, the module is triggered. The DC fault current clearing module includes a detection and comparison unit of a short-circuit current amplitude and an opening control unit for the AC circuit breaker of the sending-end station. The detection and comparison unit of the short-circuit current amplitude is configured to detect a DC short-circuit current and compare the current value with a rated value. When the short-circuit current amplitude is less than the rated value, the opening control unit for the AC circuit breaker of the sending-end station is triggered. The opening control unit for the AC circuit breaker is configured to control the AC circuit breaker of the sending-end station to be disconnected after receiving an opening signal.

The reclosing control module for the AC circuit breaker of the sending-end station, configured to control the AC circuit breaker of the sending-end station to be reclosed. When the module receives a fault clearing signal output from a DC short-circuit fault detection module, the module is triggered. The reclosing control module for the AC circuit breaker of the sending-end station includes a reclosing control unit for an AC circuit breaker. The reclosing control unit for the AC circuit breaker is configured to control the AC circuit breaker of the sending-end station to be reclosed.

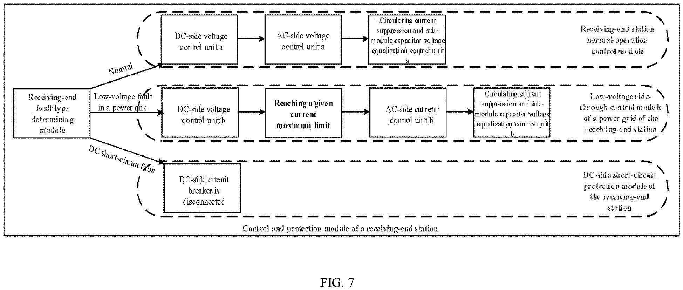

As shown in FIG. 7, in a preferred embodiment, the control and protection module of the receiving-end station includes the following modules.

A receiving-end fault type determining module, configured to determine a fault type in operation and trigger a control module corresponding to a fault type. When a short-circuit signal in the DC electric transmission line is detected, a DC-side short-circuit protection module of the receiving-end station is triggered. When a low voltage fault is detected in an onshore power grid, a low-voltage fault ride-through control module of a power grid of the receiving-end station is triggered. When it is determined that no fault occurs, a receiving-end station normal-operation control module is triggered.

The receiving-end station normal-operation control module, configured to control a voltage in the DC electric transmission line to a rated value during normal operation and power generation of the wind farm.

The low-voltage fault ride-through control module of the power grid of the receiving-end station, configured to control a receiving-end converter station to ride-through a low-voltage fault in the power grid. After the low-voltage fault occurs in the power grid, the receiving-end station operates according to a principle of priority output of a reactive power. After an active power limit is reached, a DC electric transmission voltage automatically rises and is automatically linked with power blocking control in the wind farm, the reactive power is compensated to the power system in a low-voltage fault stage of the onshore power gird, and fault ride through of an AC/DC power grid is completed through cooperation with the unloading circuit of the wind power converter.

The DC-side short-circuit protection module of the receiving-end station, configured to rapidly perform cut-off in case of a short-circuit fault on a DC side.

In a specific application example, a DC circuit breaker may be used for the receiving-end station. In this case, an MMC receiving-end station constructed with a DC circuit breaker and a half-bridge submodule is used, to quickly disconnect the DC circuit breaker to complete rapid cut-off when the short-circuit fault occurs on the DC side. Of course, the DC circuit breaker may not be used for the receiving-end station. In this case, an MMC receiving-end station constructed with a full-bridge submodule or a hybrid submodule needs to be used.

Based on the control and protection system for the grid-connected system of a wind farm for sending through diode rectification provided in the second embodiment of the present invention, a third embodiment of the present invention further provides a frequency-reactive power self-balancing control system that is for a grid-side inverter of a wind power converter and that matches the control and protection system.

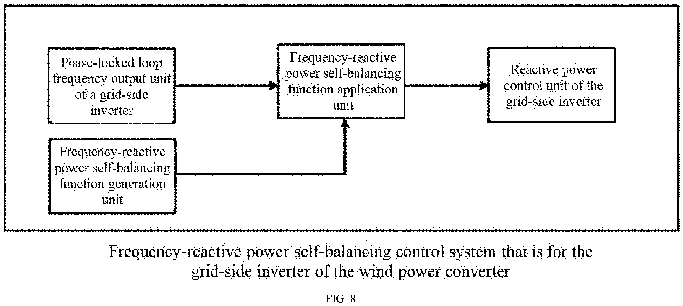

As shown in FIG. 8, the frequency-reactive power self-balancing control system that is for the grid-side inverter of the wind power converter includes:
a phase-locked loop frequency output unit of the grid-side inverter of the wind power converter, configured to extract frequency information output by a phase-locked loop and use the frequency as an input into a frequency-reactive power self-balancing function application unit;
a frequency-reactive power self-balancing function generation and storage unit, configured to generate and store a frequency-reactive power self-balancing function;
the frequency-reactive power self-balancing function application unit, configured to obtain the frequency-reactive power self-balancing function generated by the frequency-reactive power self-balancing function generation and storage unit, and use the input frequency information as an independent variable of the frequency-reactive power self-balancing function, to obtain a dependent variable as an input into a reactive power control unit of the grid-side inverter of the wind power converter; and
the reactive power control unit of the grid-side inverter of the wind power converter, configured to control a reactive power output by the grid-side inverter of the wind power converter.

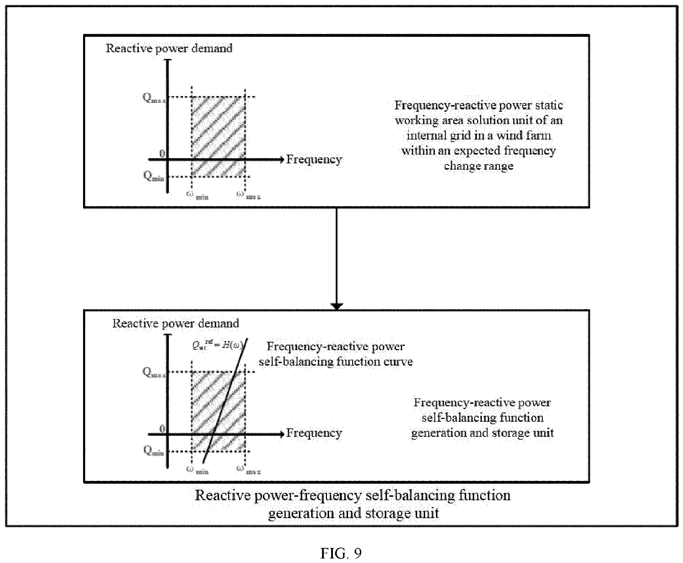

As shown in FIG. 9, in a preferred embodiment, a frequency-reactive power self-balancing function generation and storage unit includes:
a frequency-reactive power static working area solution unit of an internal grid in a wind farm within an expected frequency change range, configured to calculate an area including static working points of the internal gird in the wind farm within the expected frequency change range as an active power output of the wind farm changes, and output the area to the frequency-reactive power self-balancing function generation and storage unit. A method for solving a static working area includes but is not limited to code-based power flow calculation, simulation software-based simulation traversal solution, analytical estimation, and the like. In particular, the expected frequency change range in this implementation case is (1,1.01)pu, and power flow calculation is used to solve the static working area. In FIG. 9, Qₘₐₓ means an average of maximum reactive power demands of the internal grid in the wind farm divided by a quantity of the wind power generator sets when a power of the wind farm is a rated power. Qₘᵢₙ means an average of minimum reactive power demands corresponding to the internal grid in the wind farm divided by a quantity of the wind power generator sets when an output power of the wind farm is 0. FIG. 9 shows a frequency-reactive power self-balancing function, in which a frequency is used as an input, and a reactive power is used as an output. Within an expected frequency change range, a curve corresponding to the function intersects with both an upper boundary and a lower boundary of an area including static working points, and the first derivative of the function is greater than 0. In a specific application example, the function may be a linear function with a positive slope, and it is ensured that there are intersection points between the linear function and the upper boundary and lower boundary of the area including the static working points within the expected frequency change range.

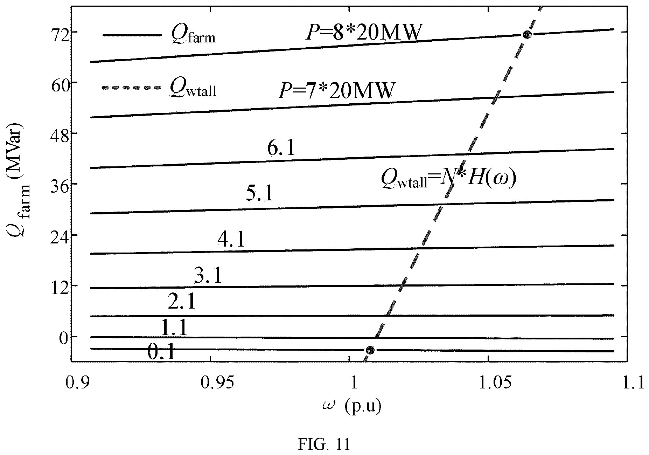

A frequency-reactive power self-balancing function generation and storage unit, configured to build and store a frequency-reactive power self-balancing function. The function is built in the following principle: an image of a curve corresponding to this function within the expected frequency change interval is located in a static working area input for the unit, and the first derivative of the curve in this interval is greater than 0. In particular, a linear function that meets the foregoing condition is used in this implementation case. FIG. 11 shows a static working area and frequency-reactive power self-balancing function curve. In FIG. 11, Q_{farm} means a reactive power demand for an internal grid in a wind farm; Q_{wta11} means a sum of reactive power output by all wind power generator sets according to a distributed-frequency reactive power self-balancing curve; N means the number of the wind power generator sets, and it is assumed that all wind power generator sets have same capacity; and H(ω) means a distributed-frequency reactive power self-balancing function.

In a preferred embodiment, a method for generating the frequency-reactive power self-balancing function by using the frequency-reactive power self-balancing function generation and storage unit includes:
calculating an area including static working points of the internal grid in the wind farm within an expected frequency change range as an active power output of the wind farm changes, where in some specific application examples, a method for solving the area including the static working points of the internal grid in the wind farm within the expected frequency change range includes: a code-based power flow calculation method, a simulation software-based simulation traversal solution method, and an analytical estimation method; and
building and storing the frequency-reactive power self-balancing function according to the area including the static working points of the internal grid in the wind farm within the expected frequency change range, where a principle for building the frequency-reactive power self-balancing function includes: an image of a curve corresponding to the frequency-reactive power self-balancing function within the expected frequency change range is located in the area including the static working points as the input, and the first derivative of the corresponding curve within the frequency change range is greater than 0.

For the frequency-reactive power self-balancing function, a frequency is used as an input, and a reactive power is used as an output. Within an expected frequency change range, a curve corresponding to the function intersects with both an upper boundary and a lower boundary of an area including static working points, and the first derivative of the function is greater than 0. In a specific application example, the function may be a linear function with a positive slope, and it is ensured that there are intersection points between the linear function and the upper boundary and lower boundary of the area including the static working points within the expected frequency change range.

The grid-connected system of a wind farm for sending through diode rectification provided in the foregoing embodiment of the present invention has the following features. First, the DC system does not need to be equipped with an additional unloading protection apparatus, and an unloading circuit of the wind power converter cooperates to complete the AC/DC grid fault ride-through. Second, the diode rectifier does not need to be equipped with a reactive power compensation device, and the wind power converter cooperates to meet a reactive power demand for the system. Third, basic manners for controlling a torque by the machine-side converter and controlling the DC bus voltage by the grid-side inverter of the wind power converter are not changed, ensuring stable operation of the wind power generator set. For the grid-connected system of a wind farm for sending through diode rectification provided in the foregoing embodiment of the present invention, a centralized unloading apparatus, a reactive power compensation apparatus, a high-voltage power acquiring apparatus, and a DC circuit breaker are not required to be additionally configured. Converters of some wind power generator sets are selected to couple small-capacity energy storage, providing starting power for the wind farm. Relying on autonomous cooperation of the unloading circuit of the wind power converter, a surplus power release channel is provided in case of a fault in a large power grid, ensuring that a diode rectified DC system is not at over-voltage. The control and protection system provided in the foregoing embodiment of the present invention enables the grid-connected system of a wind farm for sending through diode rectification to have a black start capability. In the proposed control and protection method, a DC electric transmission line unloading apparatus is not required to be configured, a remote communication system and DC circuit breaker are not required, the grid-connected system of a wind farm for sending through diode rectification has a fault ride-through capability in a large power grid and a ride-through capability for a short-circuit fault in a DC electric transmission line and a fault in an internal collection grid in the wind farm. Through the frequency-reactive power self-balancing control system of the grid-side inverter of the wind power converter provided in the foregoing embodiment of the present invention, full compensation of a reactive power of a sending system through a diode in the wind farm, frequency support for an AC system of an internal collection grid in the wind farm, independent response of a reactive power demand, and balance of reactive power output of the generator set can be implemented.

Technical solutions provided in the foregoing embodiments of the present invention are further described below by using simulation examples and with reference to accompanying drawings.

### 1. Black start of a wind farm

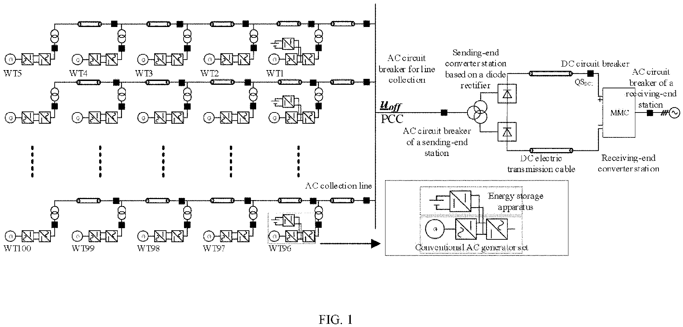

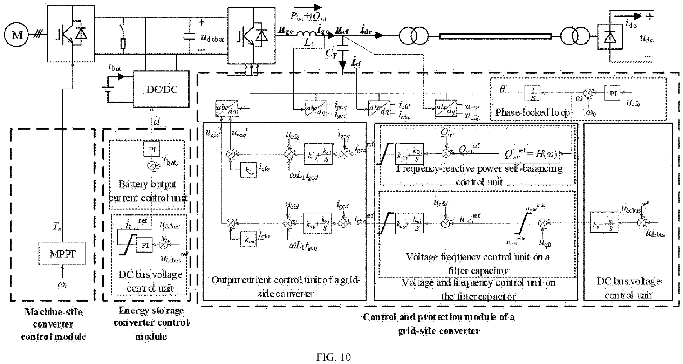

A simulation model is built in PSCAD according to a topology shown in FIG. 1, including 20 AC wind power generator sets, a sending-end converter station based on 12-pulse rectification, and an MMC receiving-end converter station. Energy storage apparatuses are connected in parallel to converter DC buses of four wind power generator sets, and DC unloading apparatuses connected in parallel to the DC buses are used for all generator sets. In simulation, switching models are used for all converters, with a simulation step of 10us, and a machine-side part of the wind power generator is replaced by a power source. Simulation system parameters are shown in the following table, corresponding to FIG. 10.

### System parameter

| Grid-side inverter of a wind power converter | | | |
|---|---|---|---|
| Quantities of wind power generators | 20 | Rated power *P* of a generator set | 8.0MW |
| DC bus voltage | 1.2kV | DC bus capacitance C | 40mF |
| Inductance *L₁* | 28.4uH | Capacitance *C*_{F} | 2.8mF |
| Transformer leakage inductance *L*_{S} | 0.08pu | Turns ratio *n* of transformer 1 | 0.69:35 |

| Energy storage apparatus | | | |
|---|---|---|---|
| Energy storage battery output voltage | 700V | Capacity of an energy storage converter | 150kW |
| Quantity of wind power generator sets equipped with energy storage | 4 | | |

| 12-pulse diode rectifier | | | |
|---|---|---|---|
| Transformer connection | Y/YΔ | Transformer leakage inductance | 0.12pu |
| Turns ratio of the Transformer | 35/66.6/66.6 | Transformer | 168MVA |
| | | capacity | |

| MMC | | | |
|---|---|---|---|
| Quantity of bridge arm sub-modules | 80 | Rated voltage of the sub-module | 2kV |
| Sub-module capacitance | 5.9mF | Bridge arm inductance | 12.5mH |
| DC side inductance | 50mH | Capacity | 160MW |

| System parameter | | | |
|---|---|---|---|
| Electric transmission voltage | 160kV | Grid voltage | 220kV |

In an initial stage of the simulation, MMC is started to establish a DC electric transmission voltage, and then black start for the wind farm is performed. The black start for the wind farm includes two stages. In a first stage, black start of five wind power generator sets equipped with an energy storage system is implemented, and in a second stage, grid-connected power generation of the wind power generator sets not equipped with the energy storage system is implemented.

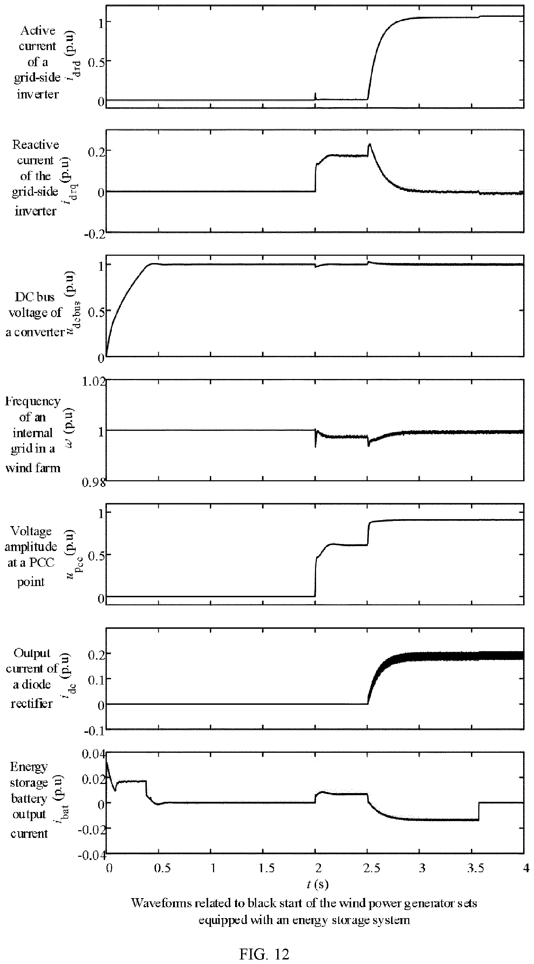

In the first stage, first, an energy storage converter is used to precharge a DC bus capacitor of the converter and control the DC bus voltage to be constant; then, the grid-side inverter of the wind power converter is started to establish a voltage of an internal grid in the wind farm, and the voltage is less than a minimum rectification threshold; next, the machine-side converter of the wind power converter is started. Because the energy storage converter has a small capacity and a current command limiting unit is provided in a control strategy for the energy storage converter, the energy storage converter cannot control the DC bus voltage after the machine-side outputs a power, and the DC bus voltage is controlled to a rated value by the grid-side inverter of the wind power converter immediately after the voltage rises slightly. In this case, the DC bus voltage is mainly controlled by the grid-side inverter of the wind power converter. Under the control of the grid-side inverter of the wind power converter, the voltage of the internal grid in the wind farm automatically rises and exceeds the rectification threshold, the diode rectifier is turned on, and the wind farm begins to generate power. Waveforms related to black start for the wind power generator sets equipped with the energy storage system are shown in FIG. 12.

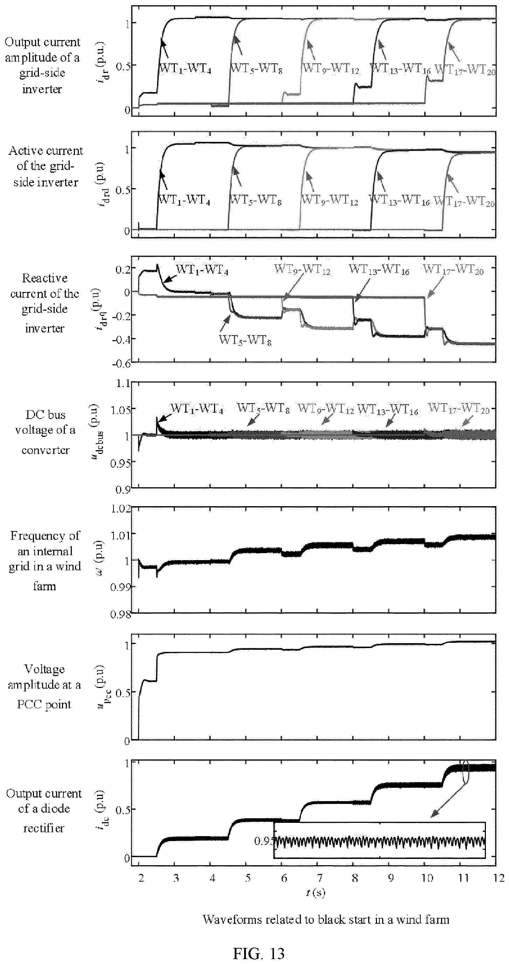

In a second stage, after the diode rectifier is turned on, the grid voltage amplitude in the internal grid in the wind farm is clamped by the DC side voltage of the diode rectifier. Under the control of a frequency-reactive power self-balancing algorithm of the grid-side inverter of the wind power converter, grid-side inverters of five wind power converters synchronously support a frequency of the internal grid in the wind farm, and a reactive power of the system is evenly distributed among the grid-side inverters of the wind power converters. In this case, a voltage amplitude-frequency of the internal grid in the wind farm remains constant, which provides a start power supply for a wind power generator set not provided with the energy storage apparatus. For the wind power generator set not provided with the energy storage apparatus, first, the grid-side inverter of the wind power converter is started to control the DC bus voltage to be constant, and then the machine-side converter of the wind power converter is started to control an electromagnetic torque of a generator according to a maximum power tracking algorithm. Under the control of a frequency-reactive power self-balancing algorithm of the grid-side inverter of the wind power converter, all grid-side inverters of the wind power converters for grid-connected operation synchronously support a frequency of the internal grid in the wind farm, and a reactive power of the system is evenly distributed among the grid-side inverters. Wind power generator sets not provided with energy storage apparatuses are started in batches, 4 wind power generator sets are started at a time, and waveforms related to black start for the wind farm is shown in FIG. 13. In FIG. 13, WT₁ to WT₄ and WT₅ to WT₈ are numbers of wind power generator sets respectively, corresponding to FIG. 1.

By far, black start for the wind farm has been completed, and related waveforms are shown in FIG. 12 and FIG. 13.

FIG. 12 and FIG. 13 verify that the black start for the wind farm can be reliably implemented by relying on topology and control proposed in one or more embodiments of the present invention on the premise that a start power for the wind farm is not provided. On the premise that a centralized reactive power compensation apparatus is not configured for the wind farm, the wind power converter can fully compensate the reactive power, synchronously support a frequency of the internal grid in the wind farm, independently respond to the reactive power demand of the internal grid in the wind farm, and balance reactive power output of the generator set by relying on the frequency-reactive self-balancing control proposed in one or more embodiments of the present invention.

### 2. Changes of a generation power in case of light load, half load, and full load of the wind farm

A simulation model is built in PSCAD according to a topology shown in FIG. 1, including 100 AC wind power generator sets, a sending-end converter station based on 12-pulse rectification, and an MMC receiving-end converter station. Energy storage apparatuses are connected in parallel to converter DC buses of 20 wind power generator sets, and all generator sets use DC unloading apparatuses connected in parallel to the DC buses. In simulation, switching models are used for all converters, with a simulation step of 10us, and a machine-side part of the wind power generator is replaced by a power source. Simulation system parameters are shown in the following table, corresponding to FIG. 10. In FIG. 10, C_{F} means a filter capacitor on an inverter side of the wind power converter, C means a DC bus capacitance of the wind power converter, L₁ means a filter inductance on an inverter side of the wind power converter, and L_{S} means a transformer leakage inductance of the wind power generator set. Other parameters in the table are described in text.

### System parameter

| Grid-side inverter of a wind power converter | | | |
|---|---|---|---|
| Quantities of wind power generators | 100 | Rated power *P* of a generator set | 8.0MW |
| DC bus voltage | 1.2kV | DC bus capacitance *C* | 40mF |
| Inductance *L*₁ | 28.4uH | Capacitance *C*_{F} | 2.8mF |
| Transformer leakage inductance *L*_{S} | 0.08pu | Turns ratio *n* of transformer 1 | 0.69:35 |

| Energy storage apparatus | | | |
|---|---|---|---|
| Energy storage battery output voltage | 700V | Capacity of an energy storage converter | 700V |
| Quantity of wind power generator sets equipped with energy storage | 20 | | |

| 12-pulse diode rectifier | | | |
|---|---|---|---|
| Transformer connection | Y/YΔ | Transformer leakage inductance | 0.12pu |
| Turns ratio of the Transformer | 35/133.2/133.2 | Transformer capacity | 840MVA |
| | | | |

| MMC | | | |
|---|---|---|---|
| Quantity of bridge arm sub-modules | 160 | Rated voltage of the sub-module | 2kV |
| Sub-module capacitance | 15mF | Bridge arm inductance | 8.74mH |
| DC side inductance | 50mH | Capacity | 800MW |

| System parameter | | | |
|---|---|---|---|
| Electric transmission voltage | 320kV | Grid voltage | 220kV |

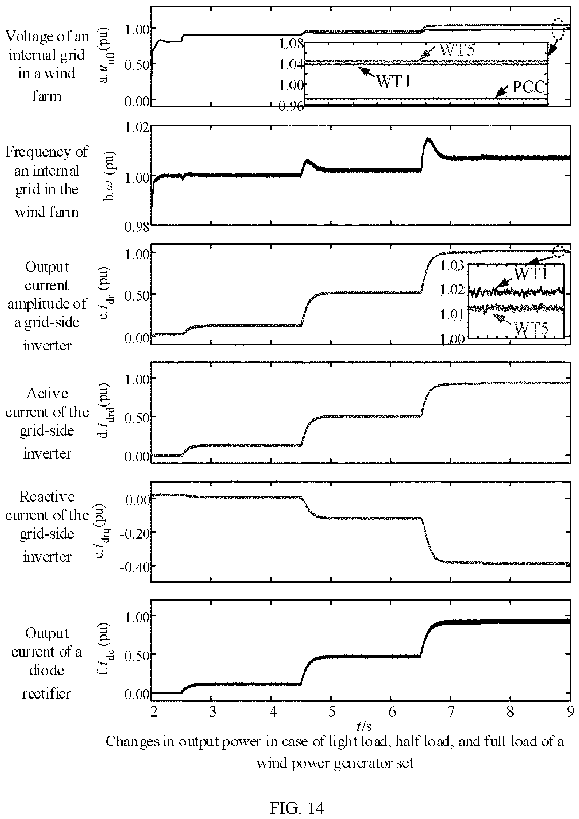

In this simulation, an output power of hundreds of wind power generator sets changes simultaneously from 0pu to 0.125pu at 2.5s, increases to 0.5pu at 4.5s, and increases to 1pu at 6.5s. Among the hundreds of wind power generator sets, when the power is a rated power, a port of a wind power generator set closest to a PCC point has a lowest voltage and a highest current amplitude, up to 1.02pu. According to operating requirements for a conventional full-power conversion wind power generator set with a power factor of 0.95, an output current amplitude of the grid-side inverter of the wind power converter during long term operation is 1.05pu. Therefore, a capacity of the wind power converter does not need to be expanded. When the power is the rated power, a voltage at a port of the wind power generator set farthest from a PCC point in the entire wind farm is the highest, reaching 1.04pu. In this case, a voltage of the PCC point is 0.97pu. Related waveforms of changes of a generation power in case of light load, half load, and full load of the wind farm are shown in FIG. 14.

By far, a process of changes of a generation power in case of light load, half load, and full load of the wind farm is completed, and the related waveforms are shown in FIG. 14.

Through the simulated waveforms in FIG. 14, it is verified that the grid-side inverter of the wind power converter of a conventional AC unit relies on topology and control proposed in one or more embodiments of the present invention, and full compensation of a reactive power in the wind farm is implemented by using the grid-side inverter of the wind power converter.

### 3. Low-voltage fault ride-through of an onshore AC power grid

A simulation model is built in PSCAD according to a topology shown in FIG. 1, including 20 AC wind power generator sets, a sending-end converter station based on 12-pulse rectification, and an MMC receiving-end converter station. Energy storage apparatuses are connected in parallel to converter DC buses of four wind power generator sets, and DC unloading apparatuses connected in parallel to the DC buses are used for all generator sets. In simulation, switching models are used for all converters, with a simulation step of 10us, and a machine-side part of the wind power generator is replaced by a power source. Simulation system parameters are shown in the following table, corresponding to FIG. 10.

### System parameter

| Grid-side inverter of a wind power converter | | | |
|---|---|---|---|
| Quantities of wind power generators | 20 | Rated power *P* of a generator set | 8.0MW |
| DC bus voltage | 1.2kV | DC bus capacitance *C* | 40mF |
| Inductance *L*₁ | 28.4uH | Capacitance *C*_{F} | 2.8mF |
| Transformer leakage inductance *L*_{S} | 0.08pu | Turns ratio *n* of transformer 1 | 0.69:35 |

| Energy storage apparatus | | | |
|---|---|---|---|
| Energy storage battery | 700V | Capacity of an | 150kW |
| output voltage | | energy storage converter | |
| Quantity of wind power generator sets equipped with energy storage | 4 | | |

| 12-pulse diode rectifier | | | |
|---|---|---|---|
| Transformer connection | Y/YΔ | Transformer leakage inductance | 0.12pu |
| Turns ratio of the Transformer | 35/66.6/66.6 | Transformer capacity | 168MVA |

| MMC | | | |
|---|---|---|---|
| Quantity of bridge arm sub-modules | 80 | Rated voltage of the sub-module | 2kV |
| Sub-module capacitance | 5.9mF | Bridge arm inductance | 12.5mH |
| DC side inductance | 50mH | Capacity | 160MW |

| System parameter | | | |
|---|---|---|---|
| Electric transmission voltage | 160kV | Grid voltage | 220kV |

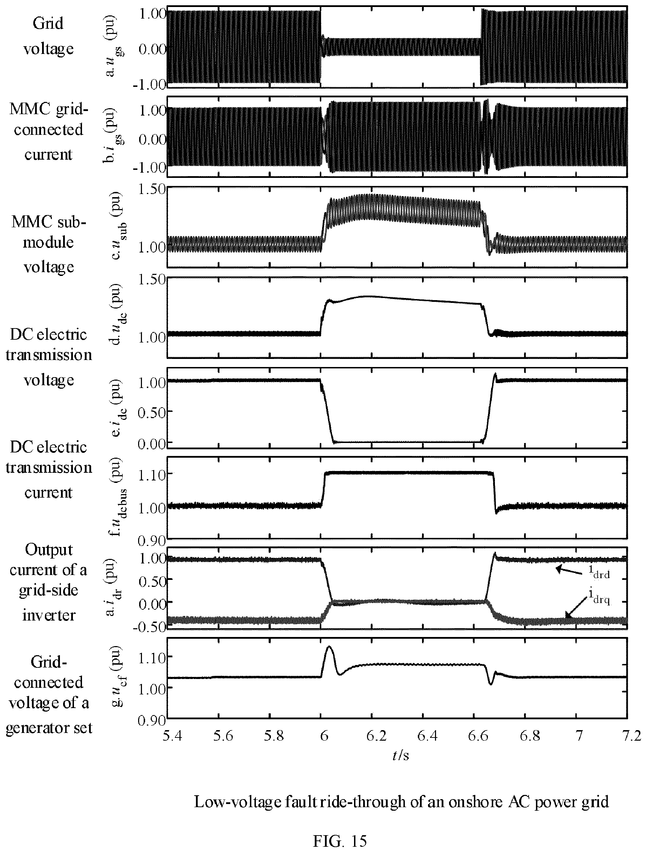

In the simulation, the wind farm is in a full power stage in previous six seconds, a three-phase voltage of the onshore AC power grid drops to 0.2pu at a sixth second, and the fault lasts for 625ms and is then recovered. After the fault occurs, the onshore converter station detects the fault and enters a fault ride-through control mode. Under a fault ride-through control strategy, the receiving-end station preferably outputs a reactive current, active output decreases rapidly, and a DC electric transmission voltage rises, which causes a DC-side voltage of a diode rectifier of a sending end to rise. Under the action of a given voltage maximum-limiting unit of a filter capacitor of the grid-side inverter control module of the wind power converter, a voltage of an internal grid in the wind farm is limited to a maximum limiting voltage. As the DC-side voltage of the diode rectifier rises, an output power of the diode rectifier is automatically blocked. In a fault stage, an unbalanced power flows into the DC bus capacitor in the generator set, a voltage of the bus capacitor rises, a DC unloading apparatus is triggered, and the unloading apparatus controls the bus voltage at 1.1 pu. As the fault is recovered, the onshore converter station returns to a normal operation mode, the DC electric transmission voltage is controlled to a rated value again, and a power of the wind farm is quickly recovered. In a fault ride-through process, the DC electric transmission voltage reaches a maximum of 1.3pu. Waveforms related to low-voltage fault ride-through of an onshore AC power grid are shown in FIG. 15. In FIG. 15, *i_{drd}* is a d-axis component of a grid-connected current of the wind power generator set, that is, an active component, and *i_{drq}* is a q-axis component of the grid-connected current of the wind power generator set, that is, a reactive component.

By far, the low-voltage fault ride-through of the onshore AC power grid of the system is completed, and related waveforms are shown in FIG. 15.

Through the simulated waveforms shown in FIG. 15, it is verified that, in case that a centralized unloading apparatus and a remote communication system are not configured, the system can rely on topology and control proposed in one or more embodiments of the present invention, and AC/DC grid fault ride-through is completed through cooperation with an unloading circuit of the wind power converter.

### 4. Protection and ride-through of a DC short-circuit fault

A simulation model is built in PSCAD according to a topology shown in FIG. 1, including 20 AC wind power generator sets, a sending-end converter station based on 12-pulse rectification, and an MMC receiving-end converter station. Energy storage apparatuses are connected in parallel to converter DC buses of four wind power generator sets, and DC unloading apparatuses connected in parallel to the DC buses are used for all generator sets. In simulation, switching models are used for all converters, with a simulation step of 10us, and a machine-side part of the wind power generator is replaced by a power source. Simulation system parameters are shown in the following table, corresponding to FIG. 10.

### System parameter

| Grid-side inverter of a wind power converter | | | |
|---|---|---|---|
| Quantities of wind power generators | 20 | Rated power *P* of a generator set | 8.0MW |
| DC bus voltage | 1.2kV | DC bus capacitance *C* | 40mF |
| Inductance *L*₁ | 28.4uH | Capacitance *C*_{F} | 2.8mF |
| Transformer leakage inductance *L*_{S} | 0.08pu | Turns ratio *n* of transformer 1 | 0.69:35 |

| Energy storage apparatus | | | |
|---|---|---|---|
| Energy storage battery output voltage | 700V | Capacity of an energy storage converter | 150kW |
| Quantity of wind power generator sets equipped with energy storage | 4 | | |

| 12-pulse diode rectifier | | | |
|---|---|---|---|
| Transformer connection | Y/YΔ | Transformer leakage inductance | 0.12pu |
| Turns ratio of the Transformer | 35/66.6/66.6 | Transformer capacity | 168MVA |

| MMC | | | |
|---|---|---|---|
| Quantity of bridge arm sub-modules | 80 | Rated voltage of the sub-module | 2kV |
| Sub-module capacitance | 5.9mF | Bridge arm inductance | 12.5mH |
| DC side inductance | 50mH | Capacity | 160MW |

| System parameter | | | |
|---|---|---|---|
| Electric transmission voltage | 160kV | Grid voltage | 220kV |

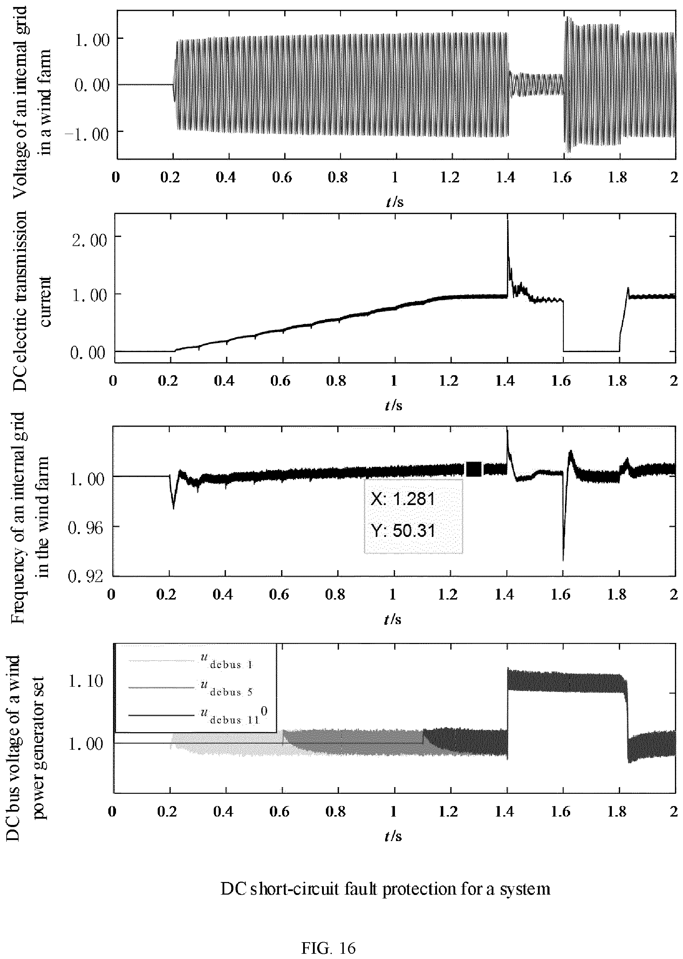

In the simulation, the wind farm is in a full power stage in previous 1.4 seconds, a short-circuit fault occurs in the DC electric transmission line at a 1.4^{th} second, and the fault lasts for 400ms and is then recovered. After the fault occurs, the onshore converter station detects the fault and quickly disconnects the DC side circuit breaker. After detecting the DC short-circuit fault, a relay protection module of a sending-end station enters a DC short-circuit fault protection mode and continuously detects a rectified current amplitude of the diode rectifier. The grid-connected inverter in the wind farm automatically enters a fault current control mode under the action of a current limiting link. A diode rectified current is quickly controlled to the rated value by the grid-connected inverter in the wind farm after temporary overcurrent occurs. After the relay protection module of the sending-end station detects that the rectified current has dropped to the rated value, the AC-side circuit breaker is opened, and a current with the DC short-circuit fault is cleared. After the wind farm is isolated from a fault point, in the internal grid in the wind farm, an output-side voltage of the filter capacitor of the grid-connected inverter automatically rises to a maximum limiting value. After the DC short-circuit fault is cleared, the AC/DC circuit breaker at the receiving-end station is reclosed, and a generation power is quickly restored. Waveforms related to short-circuit fault protection and ride-through of a DC electric transmission line are shown in FIG. 16. In FIG. 16, *u_{dcbus}*1 is a DC bus voltage of a wind power converter of a wind power generator set numbered WT1, *u_{dcbus}*5 is a DC bus voltage of a wind power converter of a wind power generator set numbered WT5, and *u_{dcbus}*11 is a DC bus voltage of a wind power converter of a wind power generator set numbered WT11.

By far, the low-voltage fault ride-through of the onshore AC power grid of the system is completed, and related waveforms are shown in FIG. 16.

Through the simulated waveforms in FIG. 16, it is verified that, on the premise that the DC circuit breaker of the sending-end station is not configured for the system, topology and control proposed in one or more embodiments of the present invention are relied on, a DC short-circuit fault can be cleared by using a fault current limiting control capability of the wind power generator set and in cooperation with the AC circuit breaker of the sending-end station, and a power of the wind farm is quickly restored after the fault is cleared.

In the grid-connected system of a wind farm for sending through diode rectification, the control and protection system, and the frequency-reactive power self-balancing control system of the grid-side inverter of the wind power converter, the grid-connected system of a wind farm for sending through diode rectification includes: an AC wind power generator set, where after ACs are gathered, a voltage is boosted, rectified, and output at the sending-end converter station through a 12-pulse diode rectifier, the sending-end converter station is connected to the onshore receiving-end MMC station through a DC electric transmission circuit, some wind power generator sets are connected in parallel to a DC energy storage apparatus on the DC bus, and DC unloading apparatuses are configured on DC buses of all wind power converters; and the control and protection system that matches the grid-connected system of a wind farm for sending through diode rectification, including black start control for a wind power generation system, low-voltage fault ride-through control for the onshore AC power grid, short-circuit fault protection and ride-through control for the DC electric transmission line. The wind power generator set provided with the energy storage apparatus can have a black start capability, and is used as a start source to drive the entire wind farm to be started. The wind power generator set can have a rapid power blocking capability during a low-voltage fault stage for the grid, and the unloading apparatus installed in the wind power generator set is used to absorb an unbalanced power during the low-voltage fault ride-through stage for the grid. After the fault is cleared, the power can be restored automatically, and low-voltage fault ride-through for the grid can be implemented without additional configuration of a centralized unloading apparatus. The wind power generator set can have a DC short-circuit fault protection and ride-through capability. After a DC short-circuit fault occurs, the converter of the generator set automatically controls a short-circuit current to a rated value without fault detection. After the AC circuit breaker of the receiving-end converter station is disconnected, a DC short-circuit current is cleared, and a voltage in the wind farm automatically rises without detection and exceeds are rectification threshold (rises to a voltage limit). After the DC fault is cleared, the AC circuit breaker is reclosed, and the active power is automatically and quickly restored. AC/DC fault ride-through and protection of the generator set can be implemented automatically without fault detection, which greatly improves reliability of fault protection and ride-through. An overall control framework for the wind power generator set can be similar to a control framework for a traditional AC wind power generator set, which facilitates retrofitting of the generator set. By using the frequency-reactive power self-balancing control algorithm for the grid-side inverter of the wind power converter that matches the control and protection system, balance of the wind farm frequency control, automatic response and full compensation of the wind power converter for a reactive power of an internal grid in the wind farm, and reactive power output of the generator set is implemented without relying on communication. The grid-side inverter frequency-reactive power self-balancing control algorithm for the wind power converter provided in one or more embodiments of the present invention is applied to the control and protection system provided in the present invention, so that a control strategy for a traditional AC wind power generator set can be changed minimally, costs for retrofitting of the generator set are reduced greatly, and technical achievability is greatly improved.

Matters not mentioned in the foregoing embodiments of the present invention are all well-known technologies in the field.

Because the foregoing technical solutions are used, compared with the prior art, the present invention has at least one of the following beneficial effects.

The grid-connected system of the wind farm for sending through a diode rectifier provided in the present invention is different from a DC grid-connected system of a wind farm through a diode rectifier proposed in previous research, and is not provided with a centralized unloading apparatus, a centralized reactive power compensation apparatus in an internal grid in a wind farm, a high-voltage power-acquiring apparatus, a medium-voltage AC power-acquiring cable connected to a shore, and a DC circuit breaker of a sending-end station. In addition, small-capacity energy storage apparatuses need to be configured in some wind power generator sets, so that a power supply can be established through the black start of several wind power generator sets, to drive the entire wind farm to be started, and a high-voltage power-acquiring apparatus and a medium-voltage AC power-acquiring cable connected to the shore are not required. Full compensation for the reactive power in the wind farm can be implemented by using the wind power converter, so that an unloading apparatus on the DC electric transmission line is not required, and a capacity of the converter in an existing generator set does not need to be expanded. The unloading circuit of the wind power converter is used to collaboratively complete AC/DC grid fault ride-through, without additional configuration of a centralized unloading apparatus. A current limiting control function of the wind power generator set is used in conjunction with opening and closing of the AC circuit breaker of the receiving-end station to reliably clear the DC short-circuit current, so that the DC circuit breaker of the sending-end station is not required. After the fault is cleared, the circuit breaker is reclosed, and the power is quickly restored. This significantly reduces system investment costs.

The control and protection system provided in the present invention can match the grid-connected system of a wind farm for sending through diode rectification provided in the present invention. The wind power generator set provided with the energy storage apparatus can have a black start capability, and is used as a start source to drive the entire wind farm to be started. The wind power generator set can have a rapid power blocking capability during a low-voltage fault stage for the grid, and the unloading circuit of the wind power converter is used to coordinately complete the AC/DC grid fault ride-through. After the fault is cleared, the power can be restored automatically, and low-voltage fault ride-through for the grid can be implemented without additional configuration of the centralized unloading apparatus. The wind power generator set can have a DC short-circuit fault protection and ride-through capability. After a DC short-circuit fault occurs, the converter of the generator set automatically controls a short-circuit current to a rated value without fault detection. After the AC circuit breaker of the receiving-end converter station is disconnected, a DC short-circuit current is cleared, and a voltage in the wind farm automatically rises without detection and exceeds are rectification threshold (rises to a voltage limit). After the DC fault is cleared, the AC circuit breaker is reclosed, and the active power is automatically and quickly restored. AC/DC fault ride-through and protection of the generator set can be implemented automatically without fault detection, which greatly improves reliability of fault protection and ride-through. An overall control framework for the wind power generator set can be similar to a control framework for a traditional AC wind power generator set, which facilitates retrofitting of the generator set.

The frequency-reactive power self-balancing control system of the grid-side inverter of the wind power converter provided in the present invention can match the control and protection system provided in the present invention. Balance of the wind farm frequency control, automatic response and full compensation of the wind power converter for a reactive power of an internal grid in the wind farm, and reactive power output of the generator set is implemented without relying on communication. The frequency-reactive power self-balancing control system of the grid-side inverter of the wind power converter provided in the present invention is applied to the control and protection system provided in the present invention, and basic manners for controlling a torque by the machine-side converter and controlling the DC bus voltage by the grid-side inverter of the wind power converter is changed, ensuring stable operation of the wind power generator set.

In the present invention, system-level innovation is implemented, the frequency-reactive power self-balancing function is used, the wind power converter can synchronously support the frequency of the internal grid in the wind farm and compensate for all reactive power, so that the centralized reactive power compensation apparatus in the internal grid in the wind farm is not required. The wind power converter can collaboratively meet the reactive power demand for the system by using frequency-reactive power self-balancing control technology of the grid-side inverter of the wind power converter.

In the present invention, basic manners for controlling a torque by the machine-side converter and controlling the DC bus voltage by the grid-side converter of the wind power converter are not changed, so that stable operation of the wind power generator set is ensured, and great advantages are provided compared with existing technologies.

In the present invention, the reactive power compensation device is not configured in the internal grid in the wind farm, so that lightweight offshore converter device and platform are achieved, and costs are significantly reduced.

Specific embodiments of the present invention are described above. It should be understood that the present invention is not limited to the foregoing specific implementations. Those skilled in the art can make various variations or modifications within the scope of the claims, which does not affect the essence of the present invention.

## Claims

1. A grid-connected system of a wind farm for sending through diode rectification, comprising: a full-power conversion wind power generator set, an energy storage apparatus, an AC collection line, an AC circuit breaker for line collection, a sending-end converter station based on a diode rectifier, an AC circuit breaker of a sending-end station, a DC electric transmission cable, an onshore receiving-end converter station, a current limiting reactor, a transformer, and an AC circuit breaker of a receiving-end station, wherein
multiple full-power conversion wind power generator sets are collected in parallel through the AC collection line to the sending-end converter station based on the diode rectifier, and the sending-end converter station based on the diode rectifier is connected to the onshore receiving-end converter station through the DC electric transmission cable; and the energy storage apparatus is connected to DC buses of converters of some of the full-power conversion wind power generator sets, the AC circuit breaker for line collection is configured on the AC collection line between the full-power conversion wind power generator sets, the AC circuit breaker of the sending-end station is configured on an AC side of the sending-end converter station based on the diode rectifier, the current limiting reactor is configured on a DC side of the onshore receiving-end converter station, and an AC side of the onshore receiving-end converter station is connected to an onshore power grid through the transformer and the AC circuit breaker of the receiving-end station.

2. The grid-connected system of a wind farm for sending through diode rectification according to claim 1, wherein the onshore receiving-end converter station is an onshore modular multilevel converter (MMC) station with a half-bridge sub-module structure or an on-shore MMC station with a full-bridge or hybrid sub-module structure; and
when the onshore receiving-end converter station is the on-shore MMC station with the half-bridge sub-module structure, the grid-connected system further comprises a DC circuit breaker; and the DC circuit breaker is configured on the DC side of the onshore receiving-end converter station.

3. A control and protection system that matches a grid-connected system of a wind farm for sending through diode rectification, comprising:
a main control module of a wind power generator set, configured to output a torque reference value of a machine-side converter of a wind power converter, a pitch command of the wind power generator set, and/or a start/stop command and start mode command of a grid-side inverter of the wind power converter, and a start/stop command and working mode command of an energy storage converter;
a machine-side converter control module of the wind power converter, configured to control an electromagnetic torque of a permanent magnet synchronous motor based on the torque reference value of the machine-side converter of the wind power converter sent by the main control module of the wind power generator set, wherein a control strategy for the machine-side converter of the wind power converter is the same as a control strategy for a machine-side converter of a full-power conversion wind power generator set;
a control and protection module of the grid-side inverter of the wind power converter, configured to receive the start/stop command and start mode command of the grid-side inverter of the wind power converter from the main control module of the wind power generator set, control a DC bus voltage in a normal power generation stage of the full-power conversion wind power generator set, limit voltage rise of an internal grid in the wind farm in a low-voltage fault stage of an onshore power grid, block power output by a diode rectifier, and perform fault current limiting control in case of a short-circuit fault in a DC electric transmission line;
an energy storage converter control module of the wind power generator set, configured to receive the start/stop command and working mode command of the energy storage converter from the main control module of the wind power generator set, and control the DC bus voltage in a generator set start phase, and charge an energy storage battery in a generator set power output phase;
an unloading circuit control module of the wind power converter, configured to control a DC-side unloading apparatus and stabilize the DC bus voltage after a rise in a voltage of a DC bus capacitor of the converter is detected;
a relay protection module of a sending-end converter station, configured to: determine a short-circuit fault in the DC electric transmission line and control an action of an AC circuit breaker of a receiving-end station on an AC side of the diode rectifier; and when it is determined that a short-circuit fault occurs on the DC electric transmission line, enable the AC circuit breaker of the receiving-end station on the AC side of the diode rectifier to act, to clear a fault current; when it is determined that a short-circuit fault on the DC electric transmission line is cleared, reclose the AC circuit breaker of the receiving-end station on the AC side of the diode rectifier; or when it is determined that the short-circuit fault on the DC electric transmission line is a permanent fault, send a stop command to the main control module of the wind power generator set;
a relay protection module of the receiving-end converter station, configured to: determine a short-circuit fault of the DC electric transmission line and control an outlet-side circuit breaker of the receiving-end station; and when it is determined that the short-circuit fault occurs on the DC electric transmission line, control a DC circuit breaker or the AC circuit breaker of the receiving-end station to act to remove the fault; when it is determined that the short-circuit fault on the DC electric transmission line is cleared, reclose the DC circuit breaker or the AC circuit breaker of the receiving-end station; or when it is determined that the short-circuit fault on the DC electric transmission line is a permanent fault, send a stop command to a control and protection module of the receiving-end station; and
the control and protection module of the receiving-end station, configured to control a voltage on the DC electric transmission line to a rated value in the normal power generation stage of the wind power generator set, and to compensate a reactive power for a power system in the low-voltage fault stage of the onshore power grid.

4. The control and protection system according to claim 3, wherein the control and protection module of the grid-side inverter of the wind power converter comprises:
a black start control module of the grid-side inverter of the wind power converter, configured to control the grid-side inverter of the wind power converter to establish an initial voltage for the internal grid during black start of the generator set, wherein when the grid-side inverter of the wind power converter receives a start command from the main control module of the wind power generator set, detects that a voltage for the internal grid in the wind farm has not yet been established, and detects that the DC bus voltage for the converter has been established, the black start control module of the grid-side inverter of the wind power converter is triggered; the black start control module of the grid-side inverter of the wind power converter comprises: a DC bus voltage control unit a, an initial-voltage giving unit with a voltage less than a rectification threshold, a voltage and frequency control unit a on a filter capacitor, an output current control unit a of the grid-side inverter of the wind power converter, and a drive pulse generation unit a of the grid-side inverter; wherein the DC bus voltage control unit a is configured to control the DC bus voltage of the generator set in a closed loop and output a reference value for a voltage amplitude on the filter capacitor, because the DC bus voltage of the converter has been established before the black start control module of the grid-side inverter of the wind power converter is triggered, the reference value of the voltage amplitude on the output filter capacitor output by the DC bus voltage control unit a is 0; the initial-voltage giving unit with a voltage less than a rectification threshold is configured to give an initial reference value for the voltage amplitude on the filter capacitor, and the initial reference value is less than a lowest rectification threshold; the voltage and frequency control unit a on the filter capacitor is configured to control a voltage and/or frequency on the filter capacitor in a closed loop and output a reference value of a current loop, wherein a phase value used in dq transformation derives from phase output of a phase-locked loop configured to perform phase locking on the voltage on the filter capacitor; the output current control unit a of the grid-side inverter of the wind power converter is configured to receive the reference value of the current loop output by the voltage and frequency control unit a on the filter capacitor, perform closed-loop control on a current on an outlet of the grid-side inverter of the wind power converter, and output a three-phase voltage reference value; the drive pulse generation unit a of the grid-side inverter is configured to receive the three-phase voltage reference value output by the output current control unit a of the grid-side inverter of the wind power converter and generate a drive pulse signal of the grid-side inverter of the wind power converter;
a normal-operation control module of the grid-side inverter of the wind power converter, configured to control an internal DC bus voltage of the generator set during normal operation of the grid-side inverter, wherein when a generator outputs power, the normal-operation control module of the grid-side inverter of the wind power converter is automatically triggered; the normal-operation control module of the grid-side inverter of the wind power converter comprises: a DC bus voltage control unit b, a voltage and frequency control unit b on the filter capacitor, an output current control unit b of the grid-side inverter of the wind power converter, and a drive pulse generation unit b of the grid-side inverter; wherein the DC bus voltage control unit b is configured to control the DC bus voltage of the generator set in a closed loop and output the reference value for the voltage amplitude on the filter capacitor; the voltage and frequency control unit b on the filter capacitor is configured to control a voltage and/or frequency on the filter capacitor in a closed loop and output a reference value of a current loop, wherein a phase value used in dq transformation derives from phase output of a phase-locked loop configured to perform phase locking on the voltage on the filter capacitor; the output current control unit b of the grid-side inverter of the wind power converter is configured to receive the reference value of the current ring output by the voltage and frequency control unit b on the filter capacitor, perform closed-loop control on a current on an outlet of the grid-side inverter of the wind power converter, and output a three-phase voltage reference value; the drive pulse generation unit b of the grid-side inverter receives the three-phase voltage reference value output by the output current control unit b of the grid-side inverter of the wind power converter and generates a drive pulse signal of the grid-side inverter of the wind power converter;
a power blocking control module, configured to control the grid-side inverter of the wind power converter of the generator set to block an output power when a low-voltage fault occurs in the onshore power grid, wherein when the low-voltage fault occurs in the onshore power grid, the power blocking control module is automatically triggered; the power blocking control module comprises: a DC bus voltage control unit c, a given voltage maximum-limiting unit of the filter capacitor, a voltage and frequency control unit c on the filter capacitor, an output current control unit c of the grid-side inverter of the wind power converter, and a drive pulse generation unit c of the grid-side inverter; wherein the DC bus voltage control unit c is configured to control the DC bus voltage of the generator set in a closed loop and output the reference value for the voltage amplitude on the filter capacitor; the given-voltage maximum-limiting unit of the filter capacitor is configured to limit the reference value of the voltage amplitude on the filter capacitor to a set maximum amplitude, and as a DC-side voltage on the diode rectifier rises, the output power of the diode rectifier is automatically blocked; the voltage and frequency control unit c on the filter capacitor is configured to control a voltage and/or frequency on the filter capacitor in a closed loop and output a reference value of a current loop; the output current control unit c of the grid-side inverter of the wind power converter is configured to receive the reference value of the current loop output by the voltage and frequency control unit c on the filter capacitor, perform closed-loop control on a current on an outlet of the grid-side inverter of the wind power converter, and output a three-phase voltage reference value, wherein a phase value used in dq transformation derives from phase output of a phase-locked loop configured to perform phase locking on the voltage on the filter capacitor; the drive pulse generation unit c of the grid-side inverter receives the three-phase voltage reference value output by the output current control unit c of the grid-side inverter of the wind power converter and generates a drive pulse signal of the grid-side inverter of the wind power converter; and
a short-circuit current control module of the grid-side inverter of the wind power converter, configured to control a short-circuit fault current when the short-circuit fault occurs in the internal grid or DC electric transmission line in the wind farm, to protect a switching element of the converter and the diode rectifier, wherein when the short-circuit fault occurs in the internal grid or DC electric transmission line in the wind farm, the short-circuit current control module of the grid-side inverter of the wind power converter is automatically triggered; the short-circuit current control module of the grid-side inverter of the wind power converter comprises: a DC bus voltage control unit d, a voltage and frequency control unit d on the filter capacitor, a given current maximum-limiting unit of the grid-side inverter of the wind power converter, an output current control unit d of the grid-side inverter of the wind power converter, and a drive pulse generation unit d of the grid-side inverter; wherein the DC bus voltage control unit d is configured to control the DC bus voltage of the generator set in a closed loop and output the reference value for the voltage amplitude on the filter capacitor; the voltage and frequency control unit d on the filter capacitor is configured to control a voltage and/or frequency on the filter capacitor in a closed loop and output a reference value of a current loop; the given current maximum-limiting unit of the grid-side inverter of the wind power converter is configured to limit a current output by the grid-side inverter to a set maximum amplitude according to a principle of priority output of reactive power; the output current control unit d of the grid-side inverter of the wind power converter is configured to receive the reference value of the current loop output by the voltage and frequency control unit d on the filter capacitor, perform closed-loop control on a current on an outlet of the grid-side inverter of the wind power converter, and output a three-phase voltage reference value, wherein a phase value used in dq transformation derives from phase output of a phase-locked loop configured to perform phase locking on the voltage on the filter capacitor; and the drive pulse generation unit d of the grid-side inverter receives the three-phase voltage reference value output by the output current control unit d of the grid-side inverter of the wind power converter and generates a drive pulse signal of the grid-side inverter of the wind power converter.

5. The control and protection system according to claim 3, wherein the energy storage converter control module of the wind power generator set comprises the following modules:
a precharging control module of a DC bus capacitor, configured to control the energy storage converter to precharge the DC bus capacitor of the wind power converter and control the DC bus voltage to be constant during black start of the generator set, wherein when the energy storage converter control module of the wind power generator set receives a start command, it is detected whether a voltage of an internal grid in the wind farm is established, and if the voltage is not established, the precharging control module of the DC bus capacitor is triggered; the precharging control module of the DC bus capacitor comprises: a DC voltage control unit, a battery output current command limiting unit a, a battery output current control unit a, and a pulse generation unit a of the energy storage converter; wherein the DC voltage control unit is configured to control the DC bus voltage of the generator set in a closed loop and output a current reference value; the current reference value output by the DC voltage control unit is limited by the battery output current command limiting unit a, and then a final current command value is output; the battery output current control unit a controls, in a closed loop, a current output by the energy storage battery according to the final current command value, and outputs a standardized DC reference level; the pulse generation unit a of the energy storage converter receives an output signal from the battery output current control unit a, compares the output signal from the current control unit a with a triangle wave with an amplitude of 1, and generates a drive pulse of the energy storage converter;
an energy storage battery charging control module, configured to charge an under-powered energy storage battery during power generation of the wind farm, wherein when it is detected that the voltage of the internal grid in the wind farm has been established, the DC bus voltage is constant, and the energy storage battery is in an under-powered state, the energy storage battery charging module is triggered; the energy storage battery charging control module comprises: a charging current command generation unit, a battery output current command limiting unit b, a battery output current control unit b, and a pulse generation unit b of the energy storage converter; wherein the charging current command generation unit is configured to generate and output a current reference value output by the energy storage battery; the current reference value output by the charging current command generation unit is limited by the battery output current command limiting unit b, and then a final current command value is output; the battery output current control unit b controls, in a closed loop, a current output by the energy storage battery according to the final current command value, and outputs a standardized DC reference level; the pulse generation unit b of the energy storage converter a receives an output signal from the battery output current control unit b, compares the output signal from the battery output current control unit b with a triangle wave with an amplitude of 1, and generates a drive pulse of the energy storage converter; and
an energy storage converter stop module, configured to stop the energy storage converter after power generation is started for the wind farm, and the energy storage battery is fully charged, wherein when it is detected that the voltage of the internal grid in the wind farm has been established, the DC bus voltage is constant, and the energy storage battery is fully charged, the energy storage converter stop module is triggered; and the energy storage converter stop module comprises: an energy storage converter pulse-blocking unit that is configured to block an energy storage converter drive pulse.

6. The control and protection system according to claim 3, wherein the unloading circuit control module of the wind power converter comprises:
a DC bus voltage detection unit, configured to detect a DC bus voltage of the converter of the generator set in real time and output a DC bus voltage signal from the converter of the generator set to a hysteresis comparison unit;
the hysteresis comparison unit, configured to compare the DC bus voltage of the converter of the generator set with a hysteresis interval and output an unloading resistor control trigger signal; wherein when a voltage value increases and is greater than a value in the hysteresis interval, an unloading resistor adding control unit is triggered; when a voltage value decreases and is less than a value in the hysteresis interval, an unloading resistor removal control unit is triggered;
the unloading resistor adding control unit, configured to control adding of an unloading resistor; and
the unloading resistor removal control unit, configured to control removal of the unloading resistor.

7. The control and protection system according to claim 3, wherein the relay protection module of the sending-end converter station comprises:
a sending-end DC fault detection module, configured to detect a short-circuit fault in the DC electric transmission line and trigger different control and protection modules according to fault conditions, wherein when it is detected that the DC line operates normally, a sending-end station normal-operation control module is triggered; when a DC short-circuit fault is detected, a DC fault current clearing module is triggered; or when it is detected that the DC short-circuit fault is cleared, a reclosing control module for the AC circuit breaker of the sending-end station is triggered;
the sending-end station normal-operation control module, configured to control the AC circuit breaker of the sending-end station to be closed, wherein the sending-end station normal-operation control module is triggered after receiving a normal operation signal output from the sending-end DC fault detection module; the sending-end station normal-operation control module comprises a closing control unit for the AC circuit breaker for the sending-end station; and the closing control unit for the AC circuit breaker for the sending-end station is configured to control the AC circuit breaker of the sending-end station to be closed;
the DC fault current clearing module, configured to control, when a DC short-circuit current is limited within a rated range, the AC circuit breaker of the sending-end station to be disconnected, to clear the DC short-circuit fault current; the DC fault current clearing module is triggered after receiving a DC short-circuit signal output by the sending-end DC fault detection module; the DC fault current clearing module comprises: a detection and comparison unit of a short-circuit current amplitude and an opening control unit for an AC circuit breaker of the sending-end station; wherein the detection and comparison unit of the short-circuit current amplitude is configured to detect a DC short-circuit current and compare an amplitude of the DC short-circuit current with a rated value, when the DC short-circuit current amplitude is less than the rated value, the opening control unit for the AC circuit breaker of the sending-end station is triggered; the opening control unit for the AC circuit breaker of the sending-end station is configured to control the AC circuit breaker of the sending-end station to be disconnected after receiving an opening signal; and
the reclosing control module for the AC circuit breaker of the sending-end station, configured to control the AC circuit breaker of the sending-end station to be reclosed, wherein the reclosing control module for the AC circuit breaker of the sending-end station is triggered after receiving a fault clearing signal output by the sending-end DC fault detection module; and the reclosing control module for the AC circuit breaker of the sending-end station comprises: a reclosing control unit for the AC circuit breaker, wherein the reclosing control unit for the AC circuit breaker is configured to control the AC circuit breaker of the sending-end station to be reclosed.

8. The control and protection system according to claim 3, wherein the control and protection module of the receiving-end station comprises:
a receiving-end fault type determining module, configured to determine a fault type in operation and trigger a control module corresponding to a fault type, wherein when a short-circuit signal in the DC electric transmission line is detected, a DC-side short-circuit protection module of the receiving-end station is triggered, when a low-voltage fault is detected in an onshore power grid, a low-voltage fault ride-through control module of a power grid of the receiving-end station is triggered; or when it is determined that no fault occurs, a receiving-end station normal-operation control module is triggered;
the receiving-end station normal-operation control module, configured to control a voltage in the DC electric transmission line to a rated value during normal operation and power generation of the wind farm;
the low-voltage fault ride-through control module of the power grid of the receiving-end station, configured to control the onshore receiving-end converter station to ride-through a low-voltage fault in the power grid, wherein after the low-voltage fault occurs in the power grid, the onshore receiving-end converter station operates according to a principle of priority output of a reactive power, after an active power limit is reached, a DC electric transmission voltage automatically rises and is automatically linked with power blocking control in the wind farm, the reactive power is compensated to the power system in a low-voltage fault stage of the onshore power gird, and fault ride-through of an AC/DC power grid is completed through cooperation with the unloading circuit of the wind power converter; and
the DC-side short-circuit protection module of the receiving-end station, configured to perform cut-off in case of a short-circuit fault on a DC side.

9. A frequency-reactive power self-balancing control system that is for a grid-side inverter of a wind power converter and that matches a control and protection system, comprising:
a phase-locked loop frequency output unit of the grid-side inverter of the wind power converter, configured to extract frequency information output by a phase-locked loop and use the frequency information as an input into a frequency-reactive power self-balancing function application unit;
a frequency-reactive power self-balancing function generation and storage unit, configured to generate and store a frequency-reactive power self-balancing function;
the frequency-reactive power self-balancing function application unit, configured to obtain the frequency-reactive power self-balancing function generated by the frequency-reactive power self-balancing function generation and storage unit, and use the input frequency information as an independent variable of the frequency-reactive power self-balancing function, to obtain a dependent variable as an input into a reactive power control unit of the grid-side inverter of the wind power converter; and
the reactive power control unit of the grid-side inverter of the wind power converter, configured to control a reactive power output by the grid-side inverter of the wind power converter.

10. The frequency-reactive power self-balancing control system according to claim 9, wherein a method for generating the frequency-reactive power self-balancing function by using the frequency-reactive power self-balancing function generation and storage unit comprises:
calculating an area comprising static working points of an internal gird in a wind farm within an expected frequency change range as an active power output of the wind farm changes; and
building and storing the frequency-reactive power self-balancing function according to the area comprising the static working points of the internal grid in the wind farm within the expected frequency change range, wherein a principle for building the frequency-reactive power self-balancing function comprises: an image of a curve corresponding to the frequency-reactive power self-balancing function within the expected frequency change range is located in the area comprising the static working points as the input, and the first derivative of the corresponding curve within the frequency change range is greater than 0.
